(19) Europäisches Patentamt

European Patent Office

Office européen des brevets

(11) Veröffentlichungsnummer: **0 325 705**

**A2**

(12) **EUROPÄISCHE PATENTANMELDUNG**

(21) Anmeldenummer: 88118196.0

(22) Anmeldetag: 02.11.88

(51) Int. Cl.⁴ **G01F 23/18 , G01F 23/16 ,**
**D06F 39/08 , G01D 5/252**

(30) Priorität: 23.01.88 DE 3801899

(43) Veröffentlichungstag der Anmeldung:
**02.08.89 Patentblatt 89/31**

(84) Benannte Vertragsstaaten:
**DE ES FR GB IT SE**

(71) Anmelder: **Rafi GmbH & Co Elektrotechnische**
**Spezialfabrik**
**Ravensburger Strasse 128-134**
**D-7981 Berg bei Ravensburg(DE)**

(72) Erfinder: **Pfeiffer, Jakob**
**Mahlerweg 11**
**D-7981 Berg bei Ravensburg(DE)**

(74) Vertreter: **Engelhardt, Guido, Dipl.-Ing.**
**Patentanwalt Montafonstrasse 35 Postfach**
**1350**
**D-7990 Friedrichshafen 1(DE)**

(54) **Verstellwegmesseinrichtung.**

(57) Bei einer Einrichtung (1) zur Ermittlung von
Schaltsignalen in Abhängigkeit von der jeweiligen
Lage zweier relativ zueinander verstellbarer Bauteile
(11, 21) die mit an Stromkreise (4, 5, 6) angeschlossenen Schaltkontakten (13, 15, 17 bzw. 23, 24, 25)
versehen sind, besteht das eine Bauteil (11) aus
einem Kontaktträger (12) mit den Kontakten (13, 15,
17) und das andere Bauteil (21) als relativ zu dem
Kontaktträger (12) verschiebbar geführte Kontaktplatte (22) die unterschiedlich kodierte mit den Kontakten (13, 15, 17) zusammenwirkende Kontaktbahnen
(23, 24, 25) aufweist.

Durch diese Ausgestaltung ist es möglich, eine
Verstellwegmeßeinrichtung zu schaffen, die klein
baut, wirtschaftlich herzustellen und störunempfindlich ist, mit der aber eine große Anzahl von Flüssigkeitsständen auf elektromechanische Weise zuverlässig zu ermitteln ist. Vor allem wird erreicht, daß
auch sehr niedere Füllstände und minimale Veränderungen der Füllmengen zu erfassen sind.

FIG. 1

## Verstellwegmeßeinrichtung

Die Erfindung bezieht sich auf eine Einrichtung zur Ermittlung von Schaltsignalen in Abhängigkeit von der jeweiligen Lage zweier relativ zueinander mechanisch verstellbarer Bauteile, die mit an Stromkreise angeschlossenen Schaltkontakten versehen sind, beispielsweise zur Erfassung des Flüssigkeitsstandes in einer Wasch- oder Geschirrspülmaschine.

Zur Bestimmung des jeweiligen Flüssigkeitsstandes in einer Wasch- oder Geschirrspülmaschine sind elektromechanische Füllstandssensoren der vorgenannten Art bekannt. Jedem Füllstand, der für die Funktion der Maschine von Bedeutung und somit zu überwachen ist, ist jeweils ein Schaltkontakt zugeordnet, so daß, um beispielsweise acht Füllstände zu ermitteln, auch acht Schaltkontakte erforderlich sind. Der Bau- und Investitionsaufwand ist somit erheblich, auch wird durch die Vielzahl der Schaltkontakte ein verhältnismäßig großer Bauraum benötigt und ein mit einer derartigen Vielzahl von oftmals nicht sehr empfindlichen Kontakten bestücktes Aggregat ist auch störanfällig.

Aufgabe der Erfindung ist es daher, eine Einrichtung der vorgenannten Gattung zu schaffen, die klein baut, wirtschaftlich herzustellen und störunempfindlich ist, mit der aber dennoch eine große Anzahl von Flüssigkeitsständen auf elektromechanische Weise zuverlässig zu übermitteln ist. Vor allem aber soll erreicht werden, daß auch sehr niedere Füllstände und minimale Veränderungen der Füllmengen zu erfassen sind, ohne daß es dazu eines großen Bau- und Investitionsaufwandes bedarf.

Gemäß der Erfindung wird dies bei einer Einrichtung der eingangs genannten Art dadurch erreicht, daß das eine Bauteil aus einem beispielsweise ortsfest angeordneten Kontaktträger mit mehreren an diesem vorzugsweise mittels jeweils einer federnden Kontaktzunge angebrachter Kontakte besteht und daß das andere Bauteil als relativ zu dem Kontaktträger verschiebbar geführte Kontaktplatte ausgebildet ist, die unterschiedlich kodierte mit den Kontakten zusammenwirkende Kontaktbahnen aufweist.

Sehr vorteilhaft ist es hierbei, die Kontakte des Kontaktträgers einzeln, beispielsweise mittels Stellschrauben, in Richtung der Kontaktbahnen verstellbar anzuordnen, so daß deren Ausrichtung auf einfache Weise vorzunehmen ist.

Ferner ist es zweckmäßig, wenn die Anpreßkraft der Kontakte an der Kontaktplatte beispielsweise jeweils mittels einer diesen zugeordneten Stellschraube einstellbar ist. Dies kann in der Art bewerkstelligt werden, daß die Stellschrauben jeweils mittels einer Druckfeder oder eines federnden Ansatzes vorzugsweise in Höhe der Kontakte an den Kontaktzungen abgestützt sind oder über an diesen und den Kontaktzungen angebrachter, gleichpolig zueinander angeordneter Permanentmagnete auf die Kontakte einwirken. Die bei einer Verstellbewegung der beiden Bauteile zu überwindenden Reibungskräfte können auf diese Weise minimiert werden.

Angebracht ist es auch, die Kontaktzungen jeweils durch eine mit einem Ende an dem Kontaktträger befestigten Blattfeder zu bilden und die Kontaktbahnen auf einer oder beiden Seiten der Kontaktplatte vorzusehen.

Nach einer vorteilhaften Ausgestaltung kann die Kontaktplatte unmittelbar oder über Zwischenglieder mit einem verstellbaren beispielsweise mit Hilfe einer in einem Gehäuse eingespannten und in Abhängigkeit von dem Flüssigkeitsstand einer Wasch- oder Geschirrspülmaschine beaufschlagten Membran verschiebbaren Stellglied fest verbunden werden, wobei es angezeigt ist, mehrere Kontaktplatten und die mit diesen jeweils zusammenwirkenden Kontaktträger symmetrisch zur Längsachse des Stellgliedes bzw. des dieses aufnehmenden Gehäuses, vorzugsweise diametral einander gegenüberliegend, anzuordnen. Außerdem können hierbei die Kontaktplatten durch einen als Mehrkant gestalteten zentrisch angeordneten Ansatz des Stellgliedes gebildet sein, an dem die Kontaktbahnen an vorzugsweise einander gegenüberliegenden Flächen angebracht sind, und die mit diesen zusammenwirkenden Kontakte einstellbar in einem das Stellglied aufnehmenden Gehäuse angeordnet sein.

Wird eine Einrichtung zur Ermittlung von Schaltsignalen gemäß der Erfindung ausgebildet, in dem das eine der relativ zueinander verstellbaren Bauteile aus einem mit Kontakten versehenen Kontaktträger und das andere der Bauteile aus einer mit unterschiedlich kodierten Kontaktbahnen versehenen Kontaktplatte bestehen, so ist es möglich, auf sehr kleinem Bauraum eine äußerst große Vielzahl von Schaltkontakten unterzubringen und somit eine Vielzahl von Füllständen oder von anderen Stellgrößen abhängige Bewegungsvorgänge auf elektro-mechanische Weise zuverlässig zu überwachen. Durch die Kodierung der Kontaktbahnen steht nämlich eine exponentiell zu diesen ansteigende Anzahl von verwertbaren Schaltsignalen zur Verfügung, bei drei an einer Kontaktplatte angebrachten Kontaktbahnen beispielsweise acht Signale. Und durch jede weitere Kontaktbahn wird die Anzahl der auswertbaren Signale verdoppelt. Ohne großen Bau- und Investitionsaufwand kann somit eine äußerst feinfühlige Überwachung eines Verstellweges bewerkstelligt werden.

Des weiteren ist die Störanfälligkeit der vorschlagsgemäß ausgebildeten Einrichtung, da die Anzahl der zu überwachenden Schaltkontakte erheblich reduziert ist, gering, auch wird für diese nur ein geringer Bauraum benötigt. Vor allem aber ist von Vorteil, daß die durch die Schaltkontakte hervorgerufenen Reibungskräfte minimiert werden können, so daß auch geringe Druckhöhen und Druckveränderungen zuverlässig zu ermitteln und zu überwachen sind. Bei einfacher Handhabung ist somit eine Einrichtung geschaffen, die vielseitig zur Kraft- bzw. Verstellwegmessung einsetzbar ist.

In der Zeichnung sind zwei Ausführungsbeispiele der gemäß der Erfindung ausgebildeten elektromechanischen Verstellwegmeßeinrichtung dargestellt, die nachfolgend im einzelnen erläutert sind. Hierbei zeigen:

Figur 1 die aus einem Kontaktträger und aus einer mit Kontaktbahnen versehenen verstellbar angeordneten Kontaktplatte bestehende Einrichtung, in Vorderansicht,

Figur 2 die Einrichtung nach Figur 1 in einer Seitenansicht, in unterschiedlichen Ausführungsvarianten

Figur 3 die gegenüberliegende Anordnung zweier Einrichtungen nach Figur 1 in einem Gehäuse, in Draufsicht und

Figur 4 eine andersartige Ausgestaltung einer Einrichtung, in einem Axialschnitt.

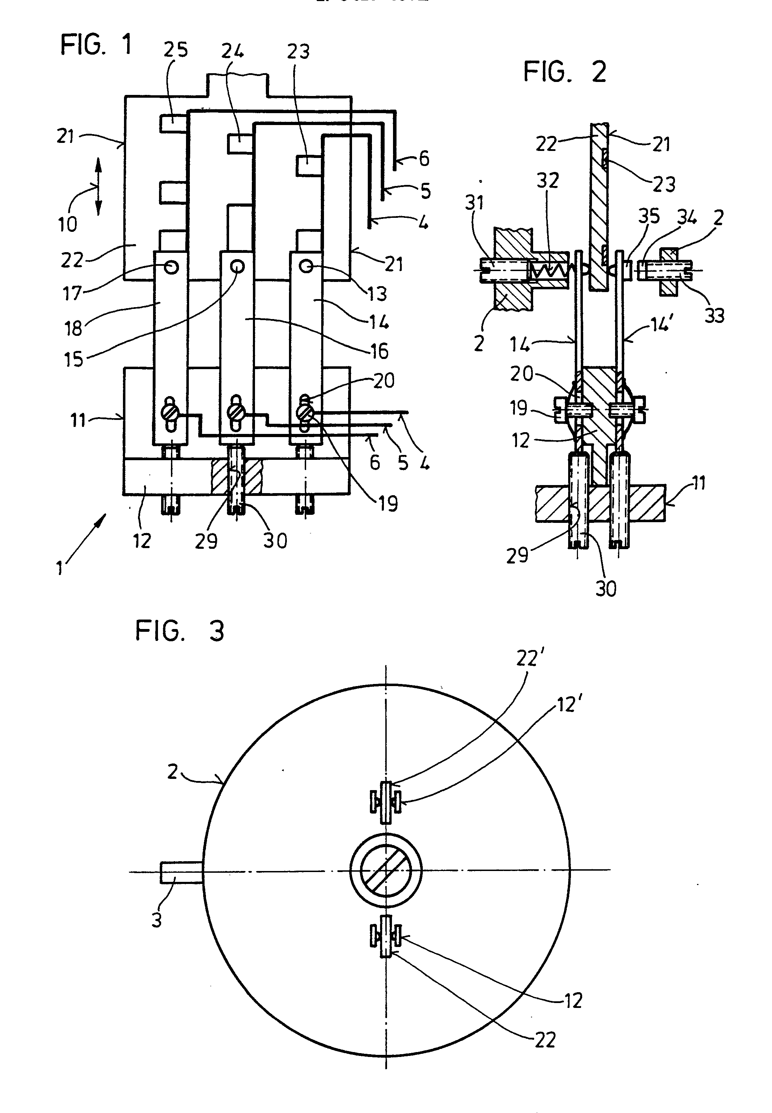

Die in den Figuren 1 bis 3 dargestellte und mit 1 bezeichnete Einrichtung dient zur Ermittlung von Schaltsignalen auf elektromechanische Weise in Abhängigkeit von der Lage zweier relativ zueinander verstellbarer Bauteile 11 und 21, die mittels Steuerleitungen 4, 5 und 6 an nicht gezeigte Schaltelemente angeschlossen sind. Die Bauteile 11 und 21 sind hierbei in einem mit einem Druckmittelanschluß 3 versehenen Gehäuse 2 eingebaut, in dem ein von dem zugeführten Druckmittel, beispielsweise von der Flüssigkeit einer Wasch- oder Geschirrspülmaschine beaufschlagtes Stellglied eingesetzt ist, das somit in Abhängigkeit von dem jeweiligen Flüssigkeitsstand verstellbar ist.

Das Bauteil 11 besteht hierbei aus einem ortsfest angeordneten Kontaktträger 12, der drei Kontakte 13, 15 und 17 aufweist. Die Kontakte 13, 15 und 17 sind hierbei an Kontaktzungen 14, 16 und 18 gehalten, die jeweils mittels einer einen Schlitz 20 durchgreifenden Klemmschraube 19 an dem Kontaktträger 12 befestigt sind.

Das mit dem Kontaktträger 12 zusammenwirkende in Richtung des Pfeiles 10 durch das Stellglied verschiebbare Bauteil 21 besteht aus einer Kontaktplatte 22, die mit den Kontakten 13, 15 und 17 zugeordneten Kontaktbahnen 23, 24 und 25 versehen ist. Die Kontaktbahnen 23, 24 und 25 sind unterschiedlich kodiert, so das mittels der Kontakte 13, 15 und 17 sowie den Kontaktbahnen 23, 24 und 25 acht unterschiedliche Schaltsignale über die Steuerleitungen 4, 5 und 6 den Schaltelementen zugeführt werden können und somit auch kleine Verstellbewegungen der Kontaktplatte 22 feststellbar und zu überwachen sind.

Um die Kontakte 13, 15 und 17 auf einfache Weise auf die Kontaktbahnen 23, 24 und 25 ausrichten zu können, sind die Schaltzungen 14, 16 und 18, die aus an einem Ende eingespannten Blattfedern bestehen, jeweils mit einer Stellschraube 30, die in Gewindebohrungen 29 des Kontaktträgers 12 gehalten sind, in Längsrichtung verstellbar. Die Schaltzungen 14, 16 und 18 sind dazu mit den von den Klemmschrauben 19 an denen auch die Steuerleitungen 4, 5 und 6 angeschlossen sind, durchgriffenen Längsschlitze 20 ausgestattet.

Des weiteren ist die Anpreßkraft, mit der die Kontakte 13, 15 und 17 an der Kontaktplatte 22 anliegen, einstellbar, so daß die bei einer Verstellbewegung auftretenden Reibungskräfte minimiert werden können. Dazu ist, wie dies der Figur 2 entnommen werden kann, jeweils eine in dem Gehäuse 2 gehaltene Stellschraube 31 bzw. 33 vorgesehen, die entweder über eine Druckfeder 32, wie dies in der linken Hälfte der Figur 2 gezeigt ist, oder gemäß der Darstellung in der rechten Hälfte der Figur 2, über zwei an der Stellschraube 33 und der Schaltzunge 14′ angebrachte gleichpolig zueinander angeordnete Permanentmagnete 34 und 35 auf die Schaltzungen 14 bzw. 14′ einwirken.

Die Kontaktplatte 22 kann, wie dies ebenfalls der Figur 2 zu entnehmen ist, beidseitig mit Leiterbahnen bestückt sein, an denen die Kontakte 13 ..., 13′ ... anliegen. Auch ist es gemäß der Ausführungsform nach Figur 3 zweckmäßig, zwei Kontaktträger 12, 12′ und mit diesen zusammenwirkende Kontaktplatten 22, 22′ diametral zur Längsachse des Gehäuses 2 einander gegenüberliegend anzuordnen, da auf diese Weise eine Symmetrie gegeben ist und somit keine Kippkräfte auftreten.

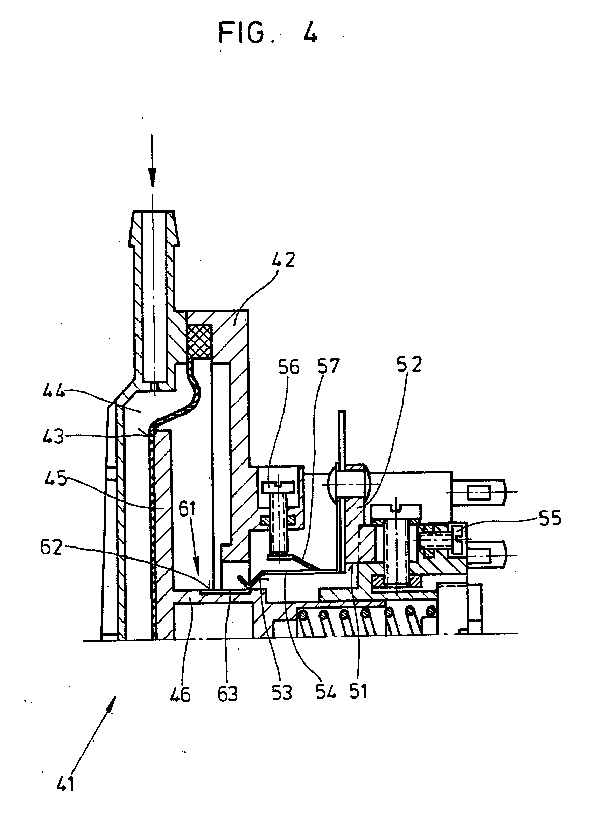

Bei der in Figur 4 dargestellten Einrichtung 41 ist in einem Gehäuse 42 eine Membran 43 eingespannt, die auf ein als Druckplatte ausgebildetes Stellglied 45 einwirkt und der ein Druckraum 44 für ein zuzuführendes Druckmittel zugeordnet ist. Das Stellglied 45 ist hierbei mit einem als Mehrkant ausgebildeten zentrischen Ansatz 46, der das verstellbare Bauteil 61 bildet, ausgestattet. Auf einander gegenüberliegnden Flächen des Ansatzes 46 sind mit kodierten Kontaktbahnen 63 versehene Kontaktplatten angeordnet, die mit einem an dem ortsfesten Bauteil 51 als Kontaktträger 52 ausgebildete Kontakte 53 zusammenwirken. Die Kontakte 53 sind jeweils wiederum durch eine Kontaktzunge 54 gehalten.

Der Kontaktträger 52 ist mittels einer Stellschraube 55 auf die Kontaktplatte 62 ausrichtbar, auch ist die Anpreßkraft der Kontakte 53 und der Kontaktplatten 62 mit Hilfe einer weiteren Stellschraube 56, die auf einen an der Kontaktzunge 54 angeformten federnden Ansatz 57 einwirkt, einstellbar.

Die Einrichtung 41 ist in gleicher Weise wirksam wie die Einrichtung nach den Figuren 1 bis 3, so daß mit Hilfe der kodierten Kontaktbahnen 63 und der Kontakte 53 eine Vielzahl von auswertbaren Signalen zu ermitteln und der Verstellweg der Membran 43 feinfühlig zu überwachen ist.

## Ansprüche

1. Einrichtung zur Ermittlung von Schaltsignalen in Abhängigkeit von der jeweiligen Lage zweier relativ zueinander mechanisch verstellbarer Bauteile, die mit an Stromkreise angeschlossenen Schaltkontakten versehen sind, beispielsweise zur Erfassung des Flüssigkeitsstandes in einer Wasch- oder Geschirrspülmaschine,
**dadurch gekennzeichnet,**
daß das eine Bauteil (11; 51) aus einem beispielsweise orstfest angeordneten Kontaktträger (12; 52) mit mehreren an diesem vorzugsweise mittels jeweils einer federnden Kontaktzunge (14, 16, 18; 54) angebrachter Kontakte (13, 15, 17; 53) besteht und daß das andere Bauteil (21; 61) als relativ zu dem Kontaktträger (12; 52) verschiebbar geführte Kontaktplatte (22; 62) ausgebildet ist, die unterschiedlich kodierte mit den Kontakten (13, 15, 17; 53) zusammenwirkende Kontaktbahnen (23, 24, 25; 63) aufweist.

2. Einrichtung nach Anspruch 1,
**dadurch gekennzeichnet,**
daß die Kontakte (13, 15, 17; 53) des Kontaktträgers (12; 52) einzeln, beispielsweise mittels Stellschrauben (30; 55), in Richtung der Kontaktbahnen (23, 24, 25; 63) verstellbar angeordnet sind.

3. Einrichtung nach Anspruch 1 oder 2,
**dadurch gekennzeichnet,**
daß die Anpreßkraft der Kontakte (13, 15, 17; 53) an der Kontaktplatte (22; 62) beispielsweise jeweils mittels einer diesen zugeordneten Stellschraube (31; 33; 56) einstellbar ist.

4. Einrichtung nach Anspruch 3,
**dadurch gekennzeichnet,**
daß die Stellschrauben (31; 56) jeweils mittels einer Druckfeder (32) oder eines federnden Ansatzes (57) vorzugsweise in Höhe der Kontakte (13, 15, 17) an den Kontaktzungen (14, 16, 18; 54) abgestützt sind.

5. Einrichtung nach Anspruch 3,
**dadurch gekennzeichnet,**
daß die Stellschrauben (33) über an diesen und den Kontaktzungen (14') angebrachter, gleichpolig zueinander angeordneter Permanentmagnete (34, 35) auf die Kontakte (13') einwirken.

6. Einrichtung nach einem oder mehreren der Ansprüche 1 bis 5,
**dadurch gekennzeichnet,**
daß die Kontaktzungen (14, 16, 18; 54) jeweils durch eine mit einem Ende an dem Kontaktträger (12; 52) befestigten Blattfeder gebildet sind.

7. Einrichtung nach einem oder mehreren der Ansprüche 1 bis 6,
**dadurch gekennzeichnet,**
daß die Kontaktbahnen (23, 24, 25) auf einer oder beiden Seiten der Kontaktplatte (22) angebracht sind.

8. Einrichtung nach einem oder mehreren der Ansprüche 1 bis 7,
**dadurch gekennzeichnet,**
daß die Kontaktplatte (63) unmittelbar oder über Zwischenglieder (Ansatz 46) mit einem verstellbaren, beispielsweise mit Hilfe einer in einem Gehäuse (42) eingespannten und in Abhängigkeit von dem Flüssigkeitsstand einer Wasch-oder Geschirrspülmaschine beaufschlagten Membran (43) verschiebbaren Stellglied (45) verbunden ist.

9. Einrichtung nach Anspruch 8,
**dadurch gekennzeichnet,**
daß mehrere Kontaktplatten (22, 22'; 62) und die mit diesen jeweils zusammenwirkenden Kontaktträger (12, 12'; 52) symmetrisch zur Längsachse des Stellgliedes (45) bzw. des dieses aufnehmenden Gehäuses (2; 42) vorzugsweise diametral einander gegenüberliegend, angeordnet sind.

10. Einrichtung nach Anspruch 8,
**dadurch gekennzeichnet**
daß die Kontaktplatten (62) durch einen als Mehrkant gestalteten zentrisch angeordneten Ansatz (46) des Stellgliedes (45) gebildet sind, an dem die Kontaktbahnen (63) an vorzugsweise einander gegenüberliegenden Flächen angebracht sind, und daß die mit diesen zusammenwirkenden Kontakte (53) einstellbar (Stellschrauben 55, 56) in einem das Stellglied (45) aufnehmenden Gehäuse (42) angeordnet sind.

FIG. 1

FIG. 2

FIG. 3

# FIG. 4